# EUROPÄISCHE PATENTSCHRIFT

(11) **EP 2 330 378 B1**
(45) Veröffentlichungstag und Bekanntmachung des Hinweises auf die Patenterteilung: **14.06.2017**
(21) Anmeldenummer: 10014595.2
(22) Anmeldetag: 13.11.2010
(51) Int. Cl.: G01B 5/24, G01B 5/207, G01B 5/20, G01B 5/00

(54) **Vorrichtung zur Überprüfung der Mass-, Lage- und Formtoleranzen eines einen Ventilsitz aufweisenden Werkstückes**
Device for checking the dimensional, positional and form tolerances of a workpiece comprising a valve seat
Dispositif de vérification des tolérances de dimension, de position et de forme d'une pièce usinée comprenant un siège de soupape

(30) Priorität: 18.11.2009 DE 202009015796 U
(43) Veröffentlichungstag der Anmeldung: 08.06.2011
(73) Patentinhaber: Horst Knäbel GmbH, 40668 Meerbusch (DE)
(72) Erfinder: KNÄBEL, Horst, 40667 Meerbusch (DE)
(74) Vertreter: Wagner Albiger & Partner Patentanwälte mbB

(56) Entgegenhaltungen:
- DE-A1- 3 030 877
- DE-B- 1 294 034
- US-B1- 6 327 788

## Beschreibung

Die Erfindung bezieht sich auf Vorrichtung zur Überprüfung der Maß-, Lage- und Formtoleranzen eines einen Ventilsitz aufweisenden Werkstückes, insbesondere eines Zylinderkopfes, bestehend aus einem auf den Ventilsitz aufsetzbaren und über einen Schaft in der Ventilschaftbohrung zentrierbaren Messkopf mit mindestens einem in einem Grundkörper des Messkopfes gelagerten Messtaster dessen Tastelement über einen vorgegebenen Weg von der vor- bzw. nachgelagerten Fläche ausgehend über die Fläche des Ventilsitzes bewegbaren Messtaster und einer die ermittelten Messwerte erfassenden, elektronischen Auswert-Einrichtung.

Die zur Einsparung und effektiven Nutzung von Kraftstoffen sowie zur Minderung der Umweltbelastung erforderlichen Maßnahmen, haben dazu geführt, dass die Anforderungen an die Kraftfahrzeugkomponenten bezüglich Auslegung, Gestaltung und maßlicher Tolerierung in den letzten Jahren stark angestiegen sind, so dass sich bei diesen Komponenten auch die Anzahl der zu kontrollierenden Merkmale stark erhöht hat.

Um diese Anforderungen erfüllen zu können, wurden optische Messverfahren entwickelt, die die Kontur des Ventilsitzes sowie der Ventilschaftbohrung abscannen, um aus den Messdaten die geforderten Merkmale errechnen zu können. Derartige Einrichtungen sind sehr aufwendig, teuer und stellen hohe Anforderungen an eine exakte Fixierung der Messköpfe und die schwingungsfreie Aufstellung der Einrichtung sowie an die Reflexion und Sauberkeit der zu kontrollierenden Flächen.

Die bekannten und bisher dafür verwendeten einfacheren und preiswerteren mechanischen Vorrichtungen sind auf bestimmte Einzelmessaufgaben ausgelegt und bieten somit nicht die Möglichkeit einer umfassenden Kontrolle aller relevanten Merkmale, sowie einer universellen Nutzung der eingesetzten Messmittel zur Lösung unterschiedlicher Messaufgaben.

So ist beispielsweise aus der DE-OS 100 58 958 eine Vorrichtung bekannt, die wie ein Ventilstößel in die Ventilbohrung eingesetzt werden kann und die mit entsprechend ausgebildeten Messelementen den Ventilsitz sowie die Ventilschaftbohrung rotierend kontrolliert. Mit einer derartigen Vorrichtung können lediglich die Rundheit des Ventilsitzes und der Rundlauf des Ventilsitzes zur Ventilschaftbohrung in einer einzigen vorgegebenen Messebene kontrolliert werden. Zur Kontrolle der Maße und Maßabweichungen des Ventilsitzes selbst, wie beispielsweise der Ventilsitzwinkel, die Ventilsitzbreite, die Ebenheit der Sitzfläche sowie die Stellung und der Verlauf der dem Ventilsitz vor- und nachgelagerten Flächen ist eine derartige Vorrichtung nicht geeignet.

Eine in der DE-OS 101 21 964 offenbarte Vorrichtung dient zur Überprüfung der Breite, des Winkels und der angrenzenden Flächen eines Ventilsitzes, die aus einem auf den Ventilsitz aufsetzbaren Messkopf besteht. An dem Messkopf ist ein Messschlitten vorgesehen, der über einen Antrieb über einen vorgebbaren Weg zumindest annähernd parallel zum Ventilsitz verfahrbar ist und der einen annähernd senkrecht zu den Konturflächen des Ventilsitzes zum Anliegen bringbaren induktiven Messfühler besitzt. Bei der Bewegung des Messschlittens werden nun über das Tastelement des Messfühlers die Konturflächen des Ventilsitzes - dazu gehören auch zumindest ein Teil der vor- und nachgelagerten Flächen sowie die Übergangskanten bzw. Verrundungen - abgetastet, um aus den dabei gewonnenen Messdaten die Ventilsitzbreite, den halben Ventilsitzwinkel und die Ebenheit der Ventilsitzfläche in der betreffenden Messebene zu ermitteln und bildlich oder statistisch auswerten zu können.

Die Rundheit des Ventilsitzes und des Rundlaufs des Ventilsitzes zur Ventilschaftbohrung kann mit einer derartigen Vorrichtung nicht kontrolliert werden. Darüber hinaus wird es bei dieser bekannten Vorrichtung als nachteilig angesehen, dass die Ausladung des parallel zur Ventilsitzfläche verlaufenden Messschlittens einschließlich Antrieb mit Wegkontrolleinrichtung verhältnismäßig groß ist und es dementsprechend auf Grund oft vorhandener Störkonturen nicht möglich ist, eine solche Vorrichtung in allen Stellungen rund um die Ventilachse einzusetzen. Das heißt, dass in diesen Stellungen nicht gemessen werden kann. Insbesondere bei Verwendung von sogenannten Adapterplatten zur Fixierung des Zylinderkopfes während der gesamten Bearbeitungsphase ist der Freiraum oberhalb der Ventilsitze meist so stark eingeschränkt, dass derartige Vorrichtungen nicht eingesetzt werden können.

(0007a) Aus der US-Patentschrift 6 327 788 ist eine Vorrichtung zur Messung der Form von Oberflächen bekannt, bei der ein als Stylus bezeichneter Tastkörper von einem besonderen Gestell aufgenommen, welches immer aus einer Tragsäule und einem Schlitten besteht, an dem ein verschiebbarer Arm mit einem Dreharm befestigt ist. Diesen teilen sind jeweils getrennte Stellorgane bzw. Stellantriebe zugeordnet sind. Ferner wird das zu messende Werkstück immer von einem Drehtisch aufgenommen, der exakt zu dem Gestell ausgerichtet sein muss. Für einen Messvorgang muss daher auch das Werkstück immer exakt zum Gestell ausgerichtet sein. Alle diese Stellorgane bzw. Stellantriebe verfügen über eigene Wegemesssysteme, die miteinander verknüpft sind. Dadurch ist diese vorbekannte Vorrichtung äußerst aufwendig. Mit dem an dem drehbaren Arm befestigten Tastkörper sind nur dessen maximale, beidseitige Auslenkungen und damit die Endlagenpunkte über ein Wegemesssystem, nämlich einen Differentialwandler erfassbar. Eine kontinuierliche Messung, wie dies bei der Überprüfung der Kontur eines Ventilsitzes erforderlich ist, kann mit dieser Vorrichtung nicht durchgeführt werden. Aufgrund des äußerst geringen Tastbereiches des Tastkörpers erscheint es unmöglich zu sein, den Tastkörper über einen Ventilsitz und dessen vor- und nachgeordnete Flächen zu bewegen und dabei die Kontur eines Ventilsitzes abzutasten und zu überprüfen.

(0007b) Die deutsche Offenlegungsschrift 1 294 034 offenbart eine Vorrichtung zum Bestimmen der Abweichung der Querschnittsfläche eines Kanals von einem vorgegebenen Nennwert mit mindestens zwei dicht in die Wandung einer gemeinsamen, ein Druckmittel enthaltenden Messkammer eingesetzten, längs einander schneidender Achsen verschieblichen, einseitig an die Innenwandung des zu messenden Kanals anlegbaren Tastkolben. Auch mit einer solchen Vorrichtung kann die Kontur eines Ventilsitzes eines Zylinderkopfes nicht abgetastet und überprüft werden.

(0007c) Aus der deutschen Offenlegungsschrift 30 30 877 ist ein Messgerät für Bohrungsdurchmesser bzw. Vergleichsmessungen von Bohrungsdurchmessern bekannt, welches aus einem Gehäuse mit einem daran angeschlossenen Messdorn besteht. In dem Gehäuse ist ein Doppelhebel schwenkbar gelagert, dessen nach außen ragender Hebelarm in eine Aussparung des Messdornes ragt und an seinem freien Ende ein als Messtaster bezeichnetes Tastelement trägt. Der im Gehäuse befindliche Hebelarm des Doppelhebels wirkt auf den Stößel eines Messwandlers, der den eigentlichen Messtaster bildet. Über ein an den Messwandler angeschlossenes Kabel sind dessen Messwerte abgreifbar. Mit einem solchen Messgerät kann weder die Kontur des Ventilsitzes eines Zylinderkopfes abgetastet noch überprüft werden.

Der vorliegenden Erfindung liegt nun die Aufgabe zugrunde, eine Vorrichtung zur Überprüfung der Fertigungstoleranzen von Werkstücken, insbesondere von Zylinderköpfen so auszubilden,
- dass es möglich ist, mit ihr einfach und preiswert alle relevanten Maß-, Lage- und Formtoleranzen im Fertigungsbereich zu kontrollieren,
- dass sie während der Messung sowohl von Hand als auch von einer maschinellen Einrichtung gehalten werden kann,
- dass sie auch bei räumlichen engen Verhältnissen problemlos eingesetzt werden kann und
- dass sie baukastenmäßig zusammengestellt und aufgebaut werden kann.

Zur Lösung dieser Aufgabe wird gemäß dem im Anspruch 1 definierten Erfindungsgegenstandes bei einer Vorrichtung der eingangs beschriebenen Gattung vorgeschlagen, mindestens ein Messtaster in einem gegenüber dem Grundkörper um eine Schwenkachse **drehbar** und spielfrei gelagerten Schwenkkörper positionierbar und an die Konturflächen des Ventilsitzes anlegbar ist, dass das Tastelement des Messtasters über **einen** Stellantrieb des Schwenkkörpers in jede beliebige Position zur Fläche des Ventilsitzes und den vor- bzw. nachgelagerten Flächen bringbar ist, dass die Stellung des Schwenkkörpers über ein ebenfalls an die Auswert-Einrichtung angeschlossenes Messgerät kontrollierbar ist und dass sich die Messachse des Messtasters im Schnittpunkt der Ventilachse mit der Schwenkachse des Schwenkkörpers kreuzt.

Durch diese Ausgestaltung der Vorrichtung ist es möglich, sowohl den Ventilsitz in jeder Winkelstellung rund um die Ventilachse zu vermessen, um aus den Signalen der Messtaster und dem die Bewegung des Schwenkkörpers kontrollierenden Messgerätes die Ventilsitzbreite, den Ventilsitzwinkel, die Ebenheit der Ventilsitzfläche zu ermitteln und den Übergang von der Ventilsitzfläche zu den angrenzenden Flächen zu kontrollieren, als auch die Rundheit des Ventilsitzes und den Rundlauf der Ventilschaftbohrung zum Ventilsitz in jeder beliebigen rechtwinklig zur Ventilachse stehenden Ebene zu messen.

Weitere Merkmale einer Vorrichtung gemäß der Erfindung sind in den Ansprüchen 2 bis 11 offenbart.

Die Erfindung sowie weitere Vorteile derselben werden nachfolgend anhand eines in einer Zeichnung dargestellten Ausführungs-beispieles näher erläutert. Dabei zeigen
- Figur 1: einen Längsschnitt durch eine Vorrichtung gemäß der Erfindung,
- Figur 2: einen gegenüber der Figur 1 um 90° versetzten Längsschnitt durch die Vorrichtung,
- Figur 3: die Vorderansicht eines Messtasters,
- Figur 4: einen Längsschnitt durch den Messtaster im Schnitt A-A und
- Figur 5: einen Längsschnitt durch den Messtaster im Schnitt B-B.

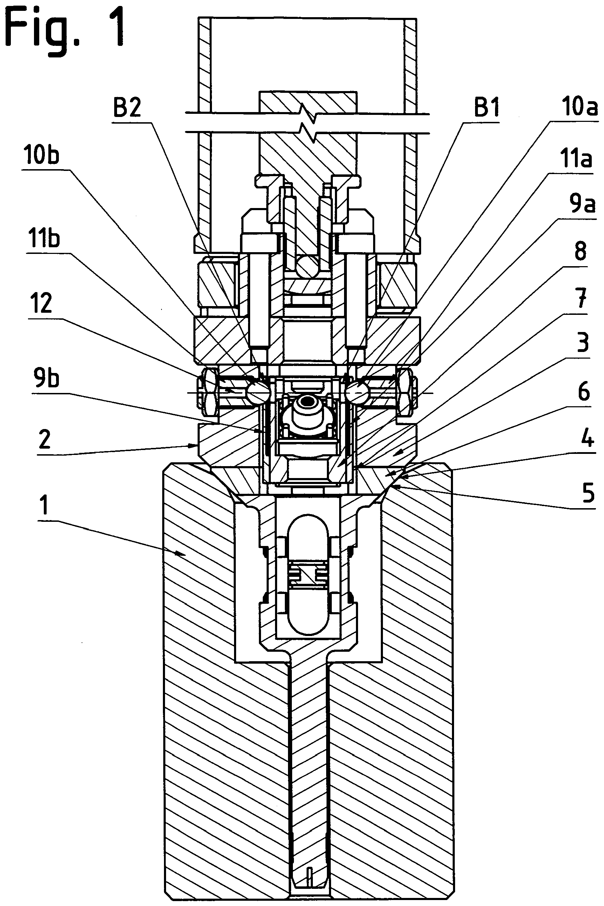

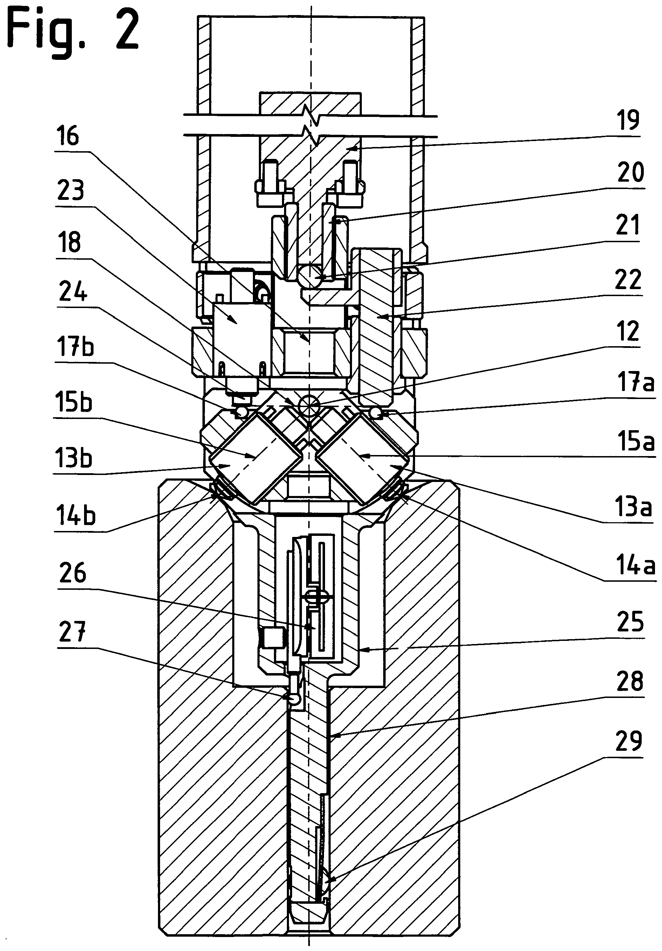

In den Figuren 1 und 2 der Zeichnung ist eine Vorrichtung jeweils im Schnitt zu sehen, die zur Überprüfung aller relevanten Maß-, Lage- und Formtoleranzen eines vereinfacht dargestellten Ventilsitzes 1 eingesetzt werden kann. Diese Vorrichtung besteht zunächst aus einem Messkopf 2, dessen Grundkörper 3 mit einer konischen Ringfläche 4 versehen ist, über die sich der Messkopf 2 bei dem Messvorgang auf der Fläche des Ventilsitzes 5, abstützt.

Dabei kann der Grundkörper 3 so ausgebildet sein, dass er im Bereich der Ringfläche 4 eine Zwischenlage 6 aufweist, die aus einem extrem harten, verschleißfesten Werkstoff, beispielsweise Hartmetall oder Keramik, besteht, um eine hohe Standzeit bezüglich der Messgenauigkeit und Reproduzierbarkeit gewährleisten zu können.

In einer Aussparung 7 des Grundkörpers 3 befindet sich ein Schwenkkörper 8, der eine Bohrung B1 aufweist, zu der angesenkte Bohrungen B2 in ihm beidseitig zugeordneten Blattfedern 9a und 9b fluchtend ausgerichtet sind und in die jeweils eine im Grundkörper 3 eingesetzte und mit einer Kugel 10a/10b bestückte Stellschraube 11 a/11 b einführbar ist, so dass dadurch eine Schwenkachse 12 entsteht, um die der Schwenkkörper 8 im Grundkörper 3 unter einer einstellbaren Federvorspannung spielfrei positioniert und dennoch leicht drehbar gelagert ist.

Wie in Figur 2 zu sehen, sind in diesem Ausführungsbeispiel in den Schwenkkörper 8 zwei induktive Messtaster 13a und 13b eingesetzt und über nicht dargestellte Klemmschrauben exakt positioniert, so dass ihre Tastelemente 14a und 14b an die Fläche des Ventilsitzes 5 anlegbar sind. Dabei ist es besonders vorteilhaft, wenn sich die Messachsen 15a und 15b der Messtaster 13a und 13b im Schnittpunkt der Ventilachse 16 mit der Schwenkachse 12 kreuzen. Dem Schwenkkörper 8 sind zwei, vorteilhaft von der Schwenkachse 12 beidseitig gleichweit entfernt liegende Stützkugeln 17a und 17b zugewiesen, die so angeordnet sind, dass eine, beide Stützkugeln 17a und 17b auf der dem Ventilsitz 5 abgewandeten Oberfläche tangierende Gerade 18 die Achse 12 schneidet.

Ein mit dem Grundkörper 3 fest verbundener Stellantrieb 19 mit antreibbarer Gewindespindel 20 betätigt über eine Kugel 21 einen Stößel 22, der in einem dem Grundkörper 3 zugeordneten Bauteil geführt ist und der auf einer Stützkugel 17a des Schwenkkörpers 8 aufliegt, während ein die Stellung des Schwenkkörpers 8 kontrollierendes Messgerät 23, beispielsweise ein induktiver Längenmesstaster, sich mit seinem unter der Kraft einer nicht dargestellten Feder stehenden Taststift 24 auf einer weiteren Stützkugel 17b abstützt, so dass über die beiden Stützkugeln 17a und 17b ein Kraftschluss zwischen der Gewindespindel 20 des Stellantriebs 19 und dem Taststift 24 des Messgerätes 23 entsteht.

Der Messkopf 2 besitzt unterhalb der Aussparung 7 für den Schwenkkörper 8 einen abgestuften und teilweise hohl ausgebildeten Schaft 25. In dem hohlen Bereich des Schaftes 25 ist ein an sich bekannter, induktiver Einbaumesstaster 26 eingesetzt, dessen Tastkugel 27 die Wandung der Ventilschaftbohrung 28 des Ventils 1 im oberen Bereich antastet. Ferner ist der Schaft 25 nahe seinem freien Ende mit zwei kugelförmigen, nicht dargestellten Stützelementen bestückt, zwischen denen diametral gegenüberliegend ein federndes Stützelement 29 angeordnet ist, so dass der Schaft 25 des Messkopfes 2 im unteren Bereich der Ventilschaftbohrung 28 spielfrei geführt wird.

Durch die kontrollierte Positionierung des Schwenkköpers 8 die Tastelemente 14a/14b der Messtaster 13a/13b in jede beliebige Position bringbar sind und so dass die Messung der Rundheit des Ventilsitzes 5 wie auch der Rundlauf der Schaftbohrung 28 zum Ventilsitz 5 in jeder beliebigen Messebene durchführbar ist.

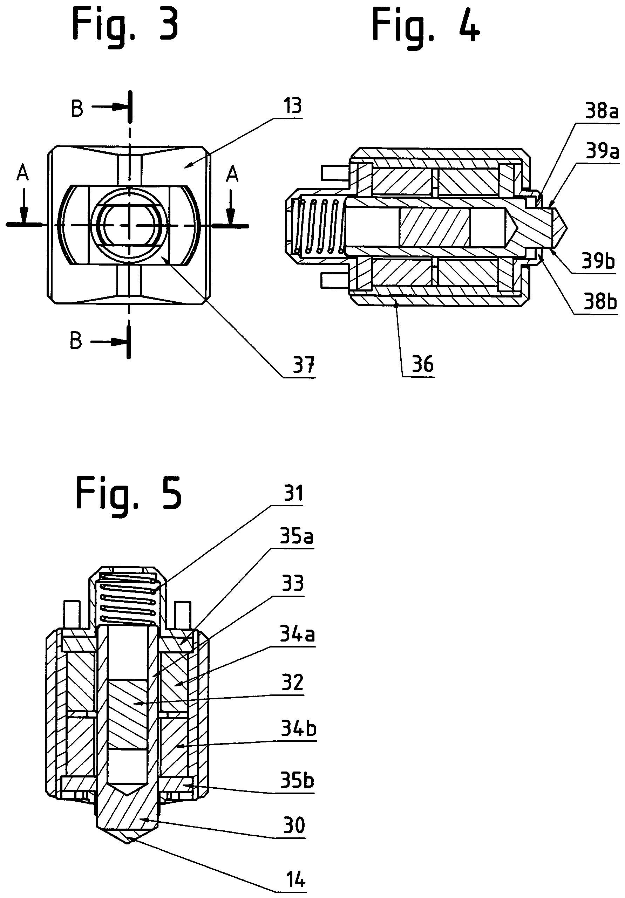

Die Figuren 3 bis 5 zeigen einen der beiden Messtaster 13a bzw. 13b, der als induktiver Längenmesstaster aufgebaut und so ausgelegt ist, dass seine Tastkolben 30 leicht ausgewechselt werden kann,
- um das mit ihm verbundene Tastelement 14 optimal, der entsprechenden Messaufgabe entsprechend, anpassen zu können,
- um die Geometrie des Tastelements 14 jederzeit und außerhalb der Vorrichtung leicht zu kontrollieren sowie
- den Tastkolben 30 bei Verschleiß komplett auswechseln zu können.

Dazu ist in dem unter der Vorspannkraft einer Feder 31 stehender, vorzugsweise aus Keramik gefertigter Tastkolben 30 ein ferromagnetischer Kern 32 implantiert, so dass sein damit durchgehend zylindrisch ausbildbarer Schaft 33 beidseitig der Induktionsspulen 34a und 34b in ebenfalls aus Keramik gefertigten Scheiben 35a und 35b gelagert werden kann.

Über einen bajonettähnlich in das Gehäuse 36 des Messtaster 13 einsetzbaren Verschlussdeckel 37, mit durch eine Auffräsung des vorspringenden Bodens entstehenden Schultern 38a und 38b, wird der Tastkolben 30 gegen Verdrehen und Herausfallen gesichert. Der
Tastkolben 30 ist dafür im Bereich der Schultern 38a und 38b mit Abflachungen 39a und 39b versehen.

Der Tastkolben 30 kann, je nach Messaufgabe, mit unterschiedlich ausgebildeten Tastelementen versehen werden. Das dargestellte Tastelement 31 ist beispielweise aus Diamant gefertigt und kegelförmig mit einem sehr kleinen Radius an der Spitze ausgebildet. Es ist aber auch möglich, ein aus einem konisch zugespitzten Kugelabschnitt gebildetes Tastelement vorzusehen, dessen Spitze einen kleinen Radius R1 aufweist, so dass der Ventilsitz 5 beispielweise im Längsschnitt mit dem Radius R1 angetastet werden kann, während der Tastradius quer dazu durch die Bildung der Spitze beeinflussbar ist. Dieser Tastradius R2 ist je nach Ausbildung der Spitze gleich oder größer dem Radius des Kugelabschnitts wählbar.

Zur Messung und Kontrolle der Ventilsüzbreite, des Ventilsitzwinkels, der Ebenheit der Ventilsitzfläche, der Übergänge zu den dem Ventilsitz 5 vor- bzw. nachgelagerten Flächen wird die erfindungsgemäße Vorrichtung in das Ventil 1 eingesetzt und der Stellantrieb 19 gestartet. Damit drückt der Stößel 22 auf die Stützkugel 17a und der Schwenkkörper 8 dreht sich um die Schwenkachse 12, so dass die Tastelemente 14a und 14b der Taster 13a und 13b von der vor- bzw. nachgelagerten Fläche ausgehend über die Fläche des Ventilsitzes 5 gleiten und dabei ihre Messwerte synchron mit den Messwerten des die Stellung des Schwenkkörpers 8 kontrollierenden Messgerätes 23 an die Messelektronik signalisieren. Dieser Vorgang kann in jeder beliebigen Winkelstellung rund um die Ventilachse 16 ausgeführt werden.

Durch Drehen des auf dem Ventilsitz 5 aufliegenden Messkopfes 2 um 360° - mittels eines an sich bekannten, kardanisch mit dem Messkopf 2 verbundenen, hier aber nicht dargestellten Drehantrieb - kann die Rundheit des Ventilsitzes 5 kontrolliert und gemessen werden. Dafür wird der Schwenkkörper 8 in eine solche Position gefahren, dass die Tastelemente 14a und 14b der Taster 13a und 13b den Ventilsitz 5 in der gewünschten, rechtwinklig zur Ventilachse 16 stehenden Messebene antasten. So ist es möglich den Ventilsitz 5 in allen beliebigen Ebenen zu kontrollieren, in dem die Tastelemente 14a und 14b der Messtaster 13a und 13b durch die kontrollierte Positionierung des Schwenkkörpers 8 bringbar sind.

In gleicher Weise ist auch möglich, den Rundlauf der Ventilschaftbohrung 28 zum Ventilsitz 5 zu überprüfen, indem die Tastelemente 14a und 14b der Messtaster 13a und 13b durch die kontrollierte Positionierung des Schwenkkörpers 8 in die für die Messung relevanten Messebenen gebracht werden.

Eine mit nur einem Messtaster 13 ausgestattete Vorrichtung ist praktikabel und kann in gleicher Weise angewendet werden. Um mit einer solchen Vorrichtung die gleiche Anzahl der Merkmale überprüfen und messen zu können, muss die Anzahl der Einstellungen und Messungen entsprechend der Aufgabenstellung angehoben werden.

Ferner ist es möglich, die Lagerung des Schwenkkörpers 8, den Stellantrieb 19, die Messtaster 13a/13b, das die Stellung des Schwenkkörpers 8 kontrollierende Messgerät 23 sowie auch andere Teile der Vorrichtung anders auszubilden.

### Bezugszahlenliste

- 1: Ventil
- 2: Messkopf
- 3: Grundkörper
- 4: Ringfläche
- 5: Ventilsitz
- 6: Zwischenlage
- 7: Aussparung
- 8: Schwenkkörper
- B1: Bohrung im Schwenkkörper
- B2: Bohrung in der Blattfeder
- 9a/b: Blattfeder
- 10a/b: Kugel
- 11a/b: Stellschraube
- 12: Schwenkachse
- 13a/b: Messtaster
- 14a/b: Tastelement
- R1 und R2: unterschiedliche Tastradien
- 15a/b: Messachse
- 16: Ventilachse
- 17a/b: Stützkugel
- 18: Gerade
- 19: Stellantrieb
- 20: Gewindespindel
- 21: Kugel
- 22: Stößel
- 23: Messgerät
- 24: Taststift
- 25: Schaft
- 26: Einbaumesstaster
- 27: Tastkugel
- 28: Ventilschaftbohrung
- 29: federndes Stützelement
- 30: Tastkolben
- 31: Feder
- 32: ferromagnetischer Kern
- 33: Schaft
- 34a/b: Induktionsspule
- 35a/b: Scheibe
- 36: Gehäuse
- 37: Verschlussdeckel
- 38a/b: Schulter
- 39a/b: Abflachung

## Patentansprüche

1. Vorrichtung zur Überprüfung der Maß-, Lage- und Formtoleranzen eines einen Ventilsitz aufweisenden Werkstückes, insbesondere eines Zylinderkopfes, umfassend einen auf den Ventilsitz (5) aufsetzbaren und über einen zur Vorrichtung gehörenden Schaft (25) in der Ventilschaftbohrung (28) zentrierbaren Messkopf (2) mit mindestens einem in einem Grundkörper (3) des Messkopfes (2) gelagerten Messtaster (13a, 13b) dessen Tastelement (14a, 14b) durch die Bewegung des Messtasters (13a, 13b) über einen vorgebbaren Weg von der dem Ventilsitz vor- bzw. nachgelagerten Fläche ausgehend über die Fläche des Ventilsitzes (5) gleitbar ist, und eine die ermittelten Messwerte erfassende elektronische Auswert-Einrichtung, wobei der Messtaster (13a, 13b) in einem gegenüber dem Grundkörper (3) um eine Schwenkachse (12) drehbar und spielfrei gelagerten Schwenkkörper (8) positionierbar und an die Konturflächen des Ventilsitzes (5) anlegbar ist, wobei das Tastelement (14a, 14b) des Messtasters (13a, 13b) über einen Stellantrieb (19) des Schwenkkörpers (8) in jede beliebige Schwenkposition zur Fläche des Ventilsitzes (5) und den dem Ventilsitz vor- bzw. nachgelagerten Flächen bringbar ist, wobei die Stellung des Schwenkkörpers (8) über ein ebenfalls an die Auswert-Einrichtung angeschlossenes Messgerät (23) der Vorrichtung kontrollierbar ist und wobei sich die Messachse (15a,15b) des Messtasters (13a,13b) im Schnittpunkt der Ventilachse (16) mit der Schwenkachse (12) des Schwenkkörpers (8) kreuzt.

2. Vorrichtung nach Anspruch 1, wobei der Messtaster (13a/13b) durch entsprechende Positionierung des Schwenkkörpers (3) zur Messung der Rundheit und des Rundlaufes in eine vorwählbare Messebene bringbar ist.

3. Vorrichtung nach Anspruch 1 oder 2, wobei der Schwenkkörper (8) eine Bohrung (B1) aufweist, zu der angesenkte Bohrungen (B2) in ihm beidseitig zugeordneten Blattfedern (9a/9b) fluchtend ausgerichtet sind.

4. Vorrichtung nach mindestens einem der Ansprüche 1 bis 3, wobei der Grundkörper (3) mit zwei mit Kugeln (10a/10b) bestückten und mit diesen in der Ansenkung der Blattfedernbohrungen (B2) anlegbaren Stellschrauben (11 a/11 b) ausgestattet ist.

5. Vorrichtung nach mindestens einem der Ansprüche 1 bis 4 wobei eine durch den Auflagepunkt eines einem Stellantrieb (19) zugeordneten Stößels (22) auf einer dem Schwenkkörper (8) zugeordneten Stützkugel (17a) und dem Auflagepunkt eines Taststiftes (24) eines Messgerätes (23) auf einer weiteren Stützkugel 17b des Schwenkkörpers (8) gedachten Geraden (18) an die Schwenkachse (12) des Schwenkkörpers (8) tangierend auslegbar ist.

6. Vorrichtung nach mindestens einem der Ansprüche 1 bis 5, wobei der Grundkörper (3) im Bereich einer unteren Ringfläche (4) eine Zwischenlage (6) aus einem extrem harten, verschleißfesten Werkstoff aufweist und diese für die Durchführung der Tastelemente (14a, 14b) und das diese umschließenden Gehäuse (36) einen radialen Spalt aufweist.

7. Vorrichtung nach mindestens einem der Ansprüche 1 bis 6, wobei der Messtaster (13a/13b) mindestens einen auswechselbaren Tastkolben (30) besitzt, der nur über einen bajonettähnlich in das Gehäuse (36) eingesetzten Verschlussdeckel (37) gegen Verdrehen und Herausfallen gesichert ist.

8. Vorrichtung nach mindestens einem der Ansprüche 1 bis 7, wobei der Tastkolben (30) des Messtasters (13a/13b) aus Keramik gefertigt ist und einen ferromagnetischern Kern (32) besitzt.

9. Vorrichtung nach mindestens einem der Ansprüche 1 bis 8, wobei der Tastkolben (30) des Messtasters (13a/13b) mit unterschiedlich ausgebildeten Tastelementen (14) bestückbar ist.

10. Vorrichtung nach mindestens einem der Ansprüche 1 bis 9, wobei das Tastelement (14a/14b) mit rechtwinklig zueinander stehend unterschiedlich großen Tastradien (R1/R2) ausgebildet ist.

11. Vorrichtung nach mindestens einem der Ansprüche 1 bis 10, wobei der Messkopf (2) einen hohlen Schaft (25) aufweist, in dem ein die Ventilschaftbohrung (28) antastender induktiver Einbaumesstaster (26) angeordnet ist.

## Claims

1. Device for verifying the dimensional, positional and shape tolerances of a workpiece which has a valve seat, in particular a cylinder head, comprising a measuring head (2) which can be placed on the valve seat (5) and which can be centred in the valve shaft hole (28) by means of a shaft (25) which belongs to the device, having at least one measurement sensor (13a, 13b) which is supported in a base member (3) of the measurement head (2) and whose sensor element (14a, 14b) is able to slide over the face of the valve seat (5) as a result of the movement of the measurement sensor (13a, 13b) over a predeterminable path starting from the face which is arranged upstream or downstream of the valve seat, and an electronic evaluation device which detects the established measurement values, wherein the measurement sensor (13a, 13b) can be positioned in a pivot member (8) which is arranged so as to be able to be rotated about a pivot axis (12) with respect to the base member (3) and which is supported in a play-free manner and can be placed on the contour faces of the valve seat (5), wherein the sensor element (14a, 14b) of the measurement sensor (13a, 13b) can be moved by means of an actuation drive (19) of the pivot member (8) into any pivot position with respect to the face of the valve seat (5) and the faces which are arranged upstream or downstream of the valve seat, wherein the position of the pivot member (8) can be controlled by means of a measurement apparatus (23) of the device, which measurement apparatus is also connected to the evaluation device, and wherein the measurement axis (15a, 15b) of the measurement sensor (13a, 13b) intersects with the pivot axis (12) of the pivot member (8) at the intersection of the valve axis (16).

2. Device according to claim 1, wherein the measurement sensor (13a/13b) can be moved by means of corresponding positioning of the pivot member (3) for measuring the roundness and the concentricity in a preselectable measurement plane.

3. Device according to claim 1 or claim 2, wherein the pivot member (8) has a hole (B1) with respect to which countersunk holes (B2) are orientated in an aligned manner in leaf springs (9a/9b) which are associated therewith at both sides.

4. Device according to at least one of claims 1 to 3, wherein the base member (3) is provided with two adjustment screws (11a/11b) which are provided with balls (10a/10b) and which can be placed therewith in the countersinking of the leaf spring holes (B2).

5. Device according to at least one of claims 1 to 4, wherein a notional straight line (18) through the support location of a tappet (22) which is associated with an actuation drive (19) on a support ball (17a) which is associated with the pivot member (8) and the support location of a sensor pin (24) of a measurement apparatus (23) on an additional support ball 17b of the pivot member (8) can be configured tangentially with respect to the pivot axis (12) of the pivot member (8).

6. Device according to at least one of claims 1 to 5, wherein the base member (3) has in the region of a lower annular face (4) an intermediate layer (6) comprising an extremely hard, wear-resistant material and the layer has a radial gap for the passage of the sensor elements (14a, 14b) and the housing (36) which surrounds them.

7. Device according to at least one of claims 1 to 6, wherein the measurement sensor (13a/13b) has at least one replaceable sensor piston (30) which is secured against torsion and falling out only by means of a closure lid (37) which is inserted in the housing (36) in a bayonet-like manner.

8. Device according to at least one of claims 1 to 7, wherein the sensor piston (30) of the measurement sensor (13a/13b) is produced from ceramic material and has a ferromagnetic core (32).

9. Device according to at least one of claims 1 to 8, wherein the sensor piston (30) of the measurement sensor (13a/13b) can be provided with differently constructed sensor elements (14).

10. Device according to at least one of claims 1 to 9, wherein the sensor element (14a/14b) is constructed with sensor radii (R1/R2) of different sizes which are located at right angles with respect to each other.

11. Device according to at least one of claims 1 to 10, wherein the measurement head (2) has a hollow shaft (25) in which an inductive installation measurement sensor (26) which touches the valve shaft hole (28) is arranged.

## Revendications

1. Dispositif de vérification des tolérances de dimension, de position et de forme d'une pièce usinée comportant un siège de soupape, en particulier d'une tête de cylindre, comprenant une tête de mesure (2), pouvant être posée sur le siège de soupape (5) et pouvant être centrée dans le trou foré de tige de soupape (28) par l'intermédiaire d'une tige (25) appartenant au dispositif, avec au moins un palpeur de mesure (13a, 13b) qui est logé dans un corps de base (3) de la tête de mesure (2) et dont l'élément de palpation (14a, 14b) peut être glissé au-dessus de la surface du siège de soupape (5) grâce au mouvement du palpeur de mesure (13a, 13b) sur une trajectoire pouvant être prescrite à partir de la surface située avant ou après le siège de soupape, et un dispositif d'évaluation électronique acquérant les valeurs mesurées déterminées,
dans lequel le palpeur de mesure (13a, 13b) peut être placé dans un corps pivotant (8) logé sans jeu et de manière à pouvoir tourner par rapport au corps de base (3) autour d'un axe de pivotement (12) et peut être posé contre les surfaces de contour du siège de soupape (5),
dans lequel l'élément de palpation (14a, 14b) du palpeur de mesure (13a, 13b) peut être amené par l'intermédiaire d'un servomoteur (19) du corps pivotant (8) dans n'importe quelle position pivotée par rapport à la surface du siège de soupape (5) et aux surfaces situées avant ou après le siège de soupape,
dans lequel la position du corps pivotant (8) peut être contrôlée par l'intermédiaire d'un appareil de mesure (23), également raccordé au dispositif d'évaluation, du dispositif
et dans lequel l'axe de mesure (15a, 15b) du palpeur de mesure (13a, 13b) croise l'axe de pivotement (12) du corps pivotant (8) au point d'intersection avec l'axe de soupape (16).

2. Dispositif selon la revendication 1,
dans lequel le palpeur de mesure (13a/13b) peut être amené dans un plan de mesure pouvant être présélectionné grâce à un positionnement correspondant du corps pivotant (3) en vue de la mesure de la rotondité et de la concentricité.

3. Dispositif selon la revendication 1 ou 2,
dans lequel le corps pivotant (8) comporte un trou foré (B1) vers lequel sont dirigés de manière à affleurer des trous chambrés (B2) dans des ressorts à lames (9a/9b) associés des deux côtés audit corps pivotant.

4. Dispositif selon au moins l'une des revendications 1 à 3,
dans lequel le corps de base (3) est équipé de deux vis de réglage (11a/11b) munies de billes (10a/10b) et pouvant être placées avec celles-ci dans la chambre des trous chambrés de ressorts à lames (B2).

5. Dispositif selon au moins l'une des revendications 1 à 4,
dans lequel une droite (18) passant par le point de contact d'un coulisseau (22) associé à un servomoteur (19) sur une bille d'appui (17a) associée au corps pivotant (8) et par le point de contact d'une tige de palpation (24) d'un appareil de mesure (23) sur une autre bille d'appui (17b) du corps pivotant (8) peut être prévue tangente à l'axe de pivotement (12) du corps pivotant (8).

6. Dispositif selon au moins l'une des revendications 1 à 5,
dans lequel le corps de base (3) comporte dans la zone d'une surface annulaire inférieure (4) une couche intermédiaire (6) en un matériau extrêmement dur et résistant à l'usure et celle-ci comporte une fente radiale pour le passage des éléments de palpation (14a, 14b) et du boîtier (36) entourant ceux-ci.

7. Dispositif selon au moins l'une des revendications 1 à 6,
dans lequel le palpeur de mesure (13a/13b) a au moins un piston de palpation (30) interchangeable qui n'est sécurisé contre toute torsion ou chute que par l'intermédiaire d'un couvercle de fermeture (37) placé à la manière d'un verrouillage à baïonnette dans le boîtier (36).

8. Dispositif selon au moins l'une des revendications 1 à 7,
dans lequel le piston de palpation (30) du palpeur de mesure (13a/13b) est fabriqué en céramique et a un noyau ferromagnétique (32).

9. Dispositif selon au moins l'une des revendications 1 à 8,
dans lequel le piston de palpation (30) du palpeur de mesure (13a/13b) peut être équipé d'éléments de palpation (14) de conception différente.

10. Dispositif selon au moins l'une des revendications 1 à 9,
dans lequel l'élément de palpation (14a/14b) est conçu avec des rayons de palpation (R1/R2) de grandeur différente et perpendiculaires l'un à l'autre.

11. Dispositif selon au moins l'une des revendications 1 à 10,
dans lequel la tête de mesure (2) comporte une tige creuse (25) dans laquelle est agencé un palpeur de mesure d'intégration (26) inductif qui palpe le trou foré de tige de soupape (28).
